# FASCICULE DE BREVET EUROPEEN

(11) **EP 4 085 648 B1**
(45) Date de publication et mention de la délivrance du brevet: **20.12.2023**
(21) Numéro de dépôt: 20851237.6
(22) Date de dépôt: 30.12.2020
(51) Int. Cl.: H04Q 9/00, E04F 10/06, E06B 9/68

(54) **CAPTEUR DESTINÉ À EMETTRE UN SIGNAL D'INFORMATION**
SENSOR ZUM ÜBERTRAGEN EINES INFORMATIONSSIGNALS
SENSOR FOR TRANSMITTING AN INFORMATION SIGNAL

(30) Priorité: 31.12.2019 FR 1915793
(43) Date de publication de la demande: 09.11.2022
(73) Titulaire: Somfy Activites SA, 74300 Cluses (FR)
(72) Inventeur: ROBIN, Serge, 74300 CLUSES (FR)
(74) Mandataire: Germain Maureau
(86) Numéro de dépôt international: PCT/FR2020/052638
(87) Numéro de publication internationale: WO 2021/136916

(56) Documents cités:
- EP-A1- 1 939 832
- EP-B1- 1 939 832
- US-B1- 10 100 814

## Description

### Domaine technique de l'invention

La présente invention se rapporte au domaine des structures déployables motorisées dans une installation domotique, tel qu'un store motorisé par exemple ou une protection solaire plus généralement. Plus particulièrement, la présente invention se rapporte à un capteur comprenant un émetteur sans fil de manière à transmettre un signal de sécurité.

### Etat de la technique

De manière connue, le document EP1939832 décrit un dispositif disposé sur un store motorisé. Ledit dispositif comprend une pile, un accéléromètre et est configuré pour envoyer un signal de sécurité lorsque qu'un mouvement est détecté par l'accéléromètre. Un telle disposition permet d'ajuster le store en fonction des mouvements détectés et notamment de replier le store pour le mettre en sécurité en cas de vent fort.

Toutefois, cette solution présente des limites.

En effet, l'utilisation d'une pile impose de périodiquement remplacer celle-ci, ou de prévoir un dimensionnement adapté pour alimenter sur une longue période à la fois les moyens de détection de mouvement ainsi que les moyens d'émission d'un signal de sécurité.

Le document US 10 100 814 B1 divulgue un capteur de vent pour un ensemble de store qui convertit l'énergie du vent afin d'alimenter le capteur de vent et d'alimenter un signal de commande.

La présente invention a pour but de résoudre tout ou partie des inconvénients mentionnés ci-dessus.

### Objet de l'invention

A cet effet, la présente invention concerne un capteur destiné à être positionné sur une partie mobile d'une structure déployable, et à émettre un signal d'information à destination d'une unité de transmission solidaire d'une partie fixe de la structure déployable, tel que le capteur comprend :
- un émetteur/récepteur sans fil configuré pour recevoir un signal incident en provenance de l'unité de transmission selon un premier mode de fonctionnement ;
- une source d'énergie autonome ;
- un convertisseur configuré pour convertir le signal incident en courant électrique et pour charger la source d'énergie autonome à l'aide dudit courant électrique.
- une unité logique de traitement adaptée pour décider de l'émission du signal d'information à l'unité de transmission par l'émetteur/récepteur sans fil selon un deuxième mode de fonctionnement, la source d'énergie autonome étant configurée pour alimenter l'unité logique de traitement,
le premier mode de fonctionnement correspondant au fonctionnement du capteur dans une position repliée de la structure déployable, le deuxième mode de fonctionnement correspondant au fonctionnement du capteur dans une position déployée de la structure déployable.

Grâce aux dispositions décrites ci-dessus, le capteur constitue une réserve d'énergie au moyen de la source d'énergie autonome en position repliée de la structure déployable dans le mode de chargement, afin de pouvoir réutiliser cette réserve en position déployée de la structure déployable dans le mode de détection et d'émission.

Selon un mode de réalisation, La transition du premier mode de fonctionnement au deuxième mode de fonctionnement peut être commandée lors du déploiement de la structure déployable. En particulier, la transition peut être déclenché par un signal de l'unité de détection de mouvement. Alternativement, un signal spécifique de réveil envoyé par l'unité de transmission peut déclencher cette transition, suite à une détection d'un mouvement de déploiement par l'unité de transmission. La transition du deuxième mode de fonctionnement au premier mode de fonctionnement peut être commandé lors du repliement de la structure déployable. Ainsi, lorsqu'un seuil de distance est atteint, l'unité de transmission peut commencer à émettre un signal incident qui déclenche pour le capteur le passage dans le premier mode de fonctionnement.

Bien entendu, une pluralité de positions peut être prises par la structure déployable. Il peut être convenu qu'une position repliée correspond à une position dans laquelle une distance entre une extrémité proximale et l'extrémité distale de ladite structure déployable est inférieure à un premier seuil, et qu'une position déployée correspond à une position dans laquelle la distance entre l'extrémité proximale et l'extrémité distale de ladite structure déployable est supérieure à deuxième seuil. Le premier et le deuxième seuil peuvent être distincts ou identiques. Le ou les seuils considérés peuvent également correspondre à un ou des seuils de distance entre une unité de transmission et le capteur.

Selon un mode de réalisation, le convertisseur est configuré pour convertir un signal radiofréquence en courant.

Une telle disposition permet au convertisseur du capteur de convertir le signal incident en courant électrique et ainsi charger la source d'énergie autonome lorsque la structure déployable est dans la position repliée.

Selon un mode de réalisation, le convertisseur est configuré pour générer un signal binaire à destination de l'unité logique de traitement.

Selon un mode de réalisation, la valeur du signal binaire généré dépend de l'état de réception du signal incident.

Selon un mode de réalisation, la structure déployable est un élément déployable de toute sorte telle qu'un store banne par exemple.

Selon un mode de réalisation, un signal d'information est de toute sorte, tel qu'un signal de sécurité comprenant une alerte par exemple.

Selon un mode de réalisation, le capteur comprend une unité de détection. L'unité de détection peut être de différents types. En particulier, l'unité de détection peut être une unité de détection de mouvement, une unité de détection capacitive ou inductive, ou encore une unité de détection tactile de tout type. Selon une autre possibilité l'unité de détection pourrait être une unité de détection de luminosité ou d'ensoleillement.

Selon un mode de réalisation, le capteur comprend une unité de détection de mouvement configurée pour détecter les mouvements de la structure déployable, l'unité logique de traitement étant configurée pour décider de l'émission du signal d'information sur la base des mouvements de la structure déployable détectés par l'unité de détection de mouvement.

Selon un mode de réalisation, un seuil entre la position déployée et la position repliée de la structure déployable est déterminé en fonction de la quantité de courant électrique issue de la conversion du signal incident.

Une telle disposition permet de détecter des mouvements anormaux de la structure déployable et d'envoyer un signal d'information à l'unité de transmission lorsque des mouvements anormaux de la structure déployable sont détectés.

Selon un mode de réalisation, le seuil est déterminé en fonction de la quantité de courant électrique issue de la conversion du signal incident.

Une telle disposition permet une économie d'énergie. En effet, l'unité de transmission n'envoie pas de signal incident si le courant électrique issue de la conversion dudit signal incident est trop faible.

Selon un mode de réalisation, le capteur est configuré pour envoyer un signal d'état comprenant au moins une information sur l'état du capteur à intervalle régulier lorsque la structure déployable est en position déployée.

Selon un mode de réalisation, le signal d'état comprend la quantité d'énergie restante dans la source d'énergie autonome. Une telle disposition permet à l'unité de transmission de connaître l'état du capteur.

Selon un mode de réalisation, le capteur est configuré pour envoyer un signal de chargement comprenant au moins une information sur l'état de la source d'énergie autonome lorsque la structure déployable est en position repliée.

Une telle disposition permet à l'unité de transmission de ne plus envoyer de signal incident lorsque le signal de chargement indique que la source d'énergie autonome est suffisamment chargée. Une telle disposition permet donc une économie d'énergie.

Selon un mode de réalisation, le signal de chargement est envoyé lorsque la source d'énergie autonome est complètement chargée.

Selon un mode de réalisation, le signal de chargement est envoyé à intervalle régulier.

Selon un mode de réalisation, le premier mode de fonctionnement est le mode de fonctionnement par défaut du capteur.

Selon un mode de réalisation, le capteur est configuré pour permettre de réaliser la charge de la source d'énergie autonome à partir de la conversion d'un signal incident en l'absence d'alimentation.

L'invention concerne également un ensemble comprenant un capteur destiné à être positionné sur une partie mobile d'une structure déployable et une unité de transmission solidaire d'une partie fixe de la structure déployable, dans lequel l'unité de transmission est configurée pour envoyer un signal de commande de changement de position de la structure déployable à un actionneur, l'actionneur étant configuré pour déplacer ladite structure déployable vers une position repliée depuis une position déployée.

Selon un mode de réalisation, l'unité de transmission est configurée pour envoyer le signal de commande à la réception du signal d'information en provenance du capteur.

Selon un mode de réalisation, l'unité de transmission est configurée pour envoyer le signal de commande à la réception du signal d'information en provenance du capteur.

Selon un mode de réalisation, l'unité de transmission est configurée pour envoyer le signal de commande lorsque ladite unité de transmission ne reçoit plus de signal d'état en provenance du capteur

L'invention concerne également un procédé de commande d'un capteur destiné à être positionné sur une partie mobile d'une structure déployable, le procédé de commande étant exécuté par le capteur et comprenant :
- un premier mode de fonctionnement correspondant à un mode de chargement, le capteur réalisant les étapes suivantes :
   ∘ réception d'un signal incident, le signal incident provenant d'une unité de transmission solidaire d'une partie fixe de la structure déployable ;
   ∘ conversion du signal incident en courant électrique ; et
   ∘ chargement d'une source d'énergie autonome du capteur à l'aide du courant électrique issu de la conversion du signal incident ; et
- un deuxième mode de fonctionnement correspondant à un mode de détection et d'émission, le capteur réalisant les étapes suivantes :
   ∘ émission d'un signal d'information à destination de l'unité de transmission ;
le premier mode de fonctionnement correspondant au fonctionnement du capteur dans une position repliée de la structure déployable, le deuxième mode de fonctionnement correspondant au fonctionnement du capteur dans une position déployée de la structure déployable.

Selon un mode de mise en oeuvre, dans le deuxième mode de fonctionnement, le capteur réalise l'étape suivante :
∘ émission d'un signal d'état à destination de l'unité de transmission comprenant une information sur une quantité d'énergie restante dans la source d'énergie autonome du capteur.

Selon un mode de mise en oeuvre, dans le premier mode de fonctionnement, le capteur réalise l'étape suivante :
∘ émission d'une information de chargement à destination de l'unité de transmission indiquant le niveau de charge de la source d'énergie autonome.

Selon un mode de mise en oeuvre, dans le premier mode de fonctionnement, le capteur réalise l'étape suivante :
∘ mise en sommeil si la charge de la source d'énergie autonome est achevée.

Selon un mode de mise en oeuvre, dans le second mode de fonctionnement, le capteur réalise l'émission d'un signal d'information à destination de l'unité de transmission en cas de détection d'un mouvement de la structure déployable.

Selon un mode de réalisation, le signal incident comprend une ou plusieurs des informations suivantes :
- un motif de synchronisation avec de synchronisé le dispositif de commande avec le dispositif d'émission;
- un en-tête comprenant un identifiant de version protocolaire permettant au dispositif d'émission de désigner au dispositif de commande le protocole de transmission utilisé ;
- des données telle qu'une adresse réseau correspondant au dispositif de réception par exemple ; et/ou
- une somme de contrôle permettant de contrôler la bonne transmission des données.

Selon un mode de réalisation le signal incident et l'instruction de configuration sont transmises selon le protocole Bluetooth, et plus spécifiquement, le « Bluetooth Advertising ».

Les différents aspects définis ci-dessus non incompatibles peuvent être combinés.

### Description sommaire des dessins

L'invention sera encore mieux comprise à l'aide de la description détaillée qui est exposée ci-dessous en regard des dessins annexés dans lesquels :
[Fig. 1] représente une structure déployable sur lequel est disposé un émetteur-récepteur conformément à la présente invention.
[Fig. 2] représente un schéma électrique d'un capteur conformément à la présente invention.
[Fig. 3] représente un mode de mise en oeuvre d'un procédé de commande d'un capteur conformément à la présente invention.
[Fig. 4] est un ordinogramme représentant un mode d'exécution d'un procédé de fonctionnement d'un capteur selon l'invention.

### Description détaillée

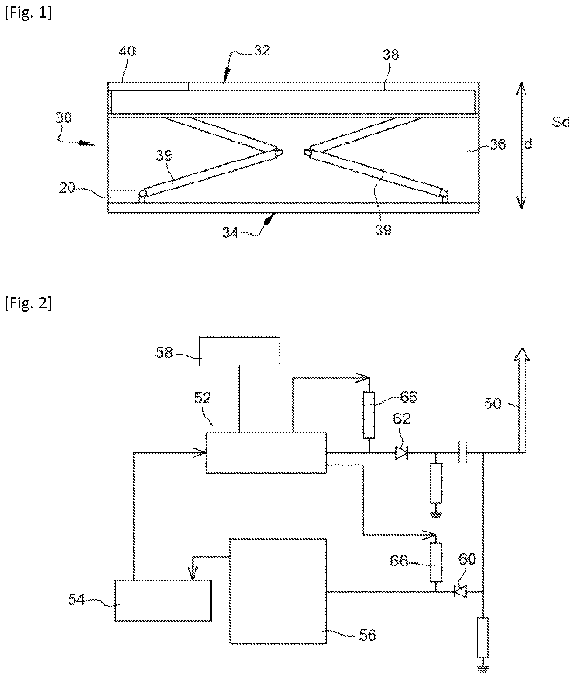

La figure 1 représente, à titre d'exemple d'une structure déployable 30, un store de terrasse motorisé. La structure déployable comprend une partie fixe 32 formant une extrémité proximale de la structure déployable destinée à être fixée sur un support comme un mur de bâtiment, une toile 36 qui est accrochée à une barre de charge 34 formant une extrémité distale de la structure déployable, un tube d'enroulement motorisé 38 agencé pour enrouler la toile 36, le tube d'enroulement motorisé 38 étant solidaire de la partie fixe 32, ainsi que des bras articulés 39 qui sont munis de ressorts, et permettent d'exercer un effort sur la barre de charge 34 à l'encontre de l'action du tube d'enroulement motorisé de manière à maintenir la toile 36 tendue.

L'enroulement ou le déroulement de la toile 36 sur le tube d'enroulement motorisé 38 permet de déplacer la barre de charge, les bras articulés et la toile entre au moins une position repliée de la structure déployable et au moins une position déployée.

La structure mobile est associée à un ensemble comprenant une unité de transmission 40 positionnée sur la partie fixe 32 et un capteur 20, fixé sur la barre de charge 34.

Bien entendu, une pluralité de positions peut être prises par la structure déployable. Il peut être convenu qu'une position repliée correspond à une position dans laquelle une distance d entre l'extrémité proximale 32 et l'extrémité distale 34 de ladite structure déployable 30 est inférieure à un premier seuil Sd, et qu'une position déployée correspond à une position dans laquelle la distance d entre l'extrémité proximale 32 et l'extrémité distale 34 de ladite structure déployable 30 est supérieure à deuxième seuil Sd. Le premier et le deuxième seuil peuvent être distincts ou identiques. Le présent exemple utilise un seuil unique Sd. Le ou les seuils considérés peuvent également correspondre à un ou des seuils de distance entre une unité de transmission 40 et le capteur 20.

La figure 2 représente un schéma électrique du capteur 20. En particulier, le capteur comprend un émetteur/récepteur sans fil 50 configuré pour recevoir un signal incident en provenance de l'unité de transmission 40 et à émettre un signal d'information à ladite unité de transmission 40, une unité logique de traitement 52 adaptée pour décider de l'émission d'un signal d'information à l'unité de transmission 40 par l'émetteur/récepteur sans fil 50 et une source d'énergie autonome 54 telle qu'un super condensateur ou une super capacité configurée pour alimenter l'unité logique de traitement 52. Le signal d'information émit par l'émetteur/récepteur sans fil 50 peut notamment être un signal de sécurité comprenant une alerte selon laquelle une unité de détection de mouvement 58 comprise dans le capteur 20 a détecté une vibration critique. Une telle disposition permet de détecter des mouvements anormaux de la structure déployable 30.

Le capteur 20 comprend également un convertisseur 56 configuré pour convertir le signal incident en courant électrique et pour alimenter la source d'énergie autonome 54 à l'aide dudit courant électrique. En effet, le convertisseur 56 reçoit le signal incident, qui est un signal radio, et le convertit en courant électrique continu, permettant ainsi de recharger la source d'énergie autonome 54. Une telle disposition permet de charger plus facilement ladite source d'énergie autonome 54 et ainsi d'en réduire la taille.

Selon un mode de réalisation, le convertisseur 56 est également configuré pour générer un signal binaire à destination de l'unité logique de traitement 52. Le signal binaire générer dépend de l'état de réception du signal incident.

Selon un mode de réalisation, lorsque qu'un signal incident est reçu par l'émetteur/récepteur sans fil 50 et que le convertisseur 56 converti ledit signal incident en courant électrique, le convertisseur 56 génère un signal binaire à destination de l'unité logique de traitement 52 égale à un. A l'inverse, lorsque le convertisseur 56 ne converti aucun signal incident, ledit convertisseur génère un signal binaire égale à zéro.

Selon un mode de réalisation, le signal binaire généré à destination de l'unité logique de traitement 52 est lu par ladite unité logique de traitement suivant un intervalle déterminé tel que toutes les 20ms par exemple. Une telle disposition permet d'envoyer un message de configuration comprenant une ou plusieurs informations à travers un ou plusieurs messages incidents.

Ainsi, une trame est constituée à partir d'une succession de signaux binaires qui peut contenir un signal de réveil (WAKE-UP), un motif de synchronisation, un entête (HEADER), des données (DATA) et un code de vérification (CRC-4).

Selon une possibilité, le signal de réveil comprend quatre signaux égaux à 1, de façon à fournir suffisamment d'énergie pour traiter les signaux à venir.

A la réception d'un signal d'information, l'unité de transmission 40 est configurée pour envoyer un signal de commande à un actionneur 38, comprenant par exemple le tube enrouleur motorisé 38, afin de faire passer la structure déployable 30 d'une position déployée à une position repliée. Une telle configuration permet de replier la structure mobile 30 et ainsi réduire sa prise au vent. Une telle disposition permet de limiter les risques de dégradation de ladite structure mobile.

Selon une possibilité, le signal d'information n'est envoyé à l'unité de transmission 40 par l'émetteur/récepteur sans fil 50 que lorsque la structure déployable 30 est en position déployée. En effet, lorsque la structure déployable 30 est en position repliée, il n'est pas nécessaire d'obtenir des informations de vibration puisque la structure mobile a déjà réduit sa prise au vent.

Le signal incident n'est envoyé par l'unité de transmission 40 que lorsque la structure déployable 30 est en position repliée. En effet, c'est dans cette position que le signal incident a une puissance suffisante pour être converti en courant électrique par le convertisseur 56. Le seuil permettant de différencier la position déployée de repliée est déterminé en fonction de la quantité de courant électrique issue de la conversion du signal incident. Une telle disposition permet une économie d'énergie. En effet, l'unité de transmission 40 n'envoie pas de signal incident si le courant électrique issu de la conversion dudit signal incident est trop faible.

Selon une possibilité, l'unité de transmission 40 peut obtenir une information de position de la structure déployable, et donc du capteur 20 par l'intermédiaire de l'actionneur 38. L'actionneur connaît en effet la position du capteur 20, par exemple par un apprentissage préalable des fins de course pour l'actionneur moteur dans son fonctionnement normal.

Le capteur 20 est configuré pour envoyer un signal d'état comprenant une information sur la quantité d'énergie restante dans la source d'énergie autonome du capteur 20 à intervalle régulier lorsque la structure déployable 30 est en position déployée. Une telle disposition permet à l'unité de transmission 40 de connaître l'état du capteur. Une telle disposition permet à l'unité de transmission 40 d'envoyer un signal de commande afin de passer la structure déployable 30 en position repliée afin de charger la source d'énergie autonome 54 du capteur 20 lorsque celle-ci ne comprend qu'une petite quantité d'énergie, et notamment si l'unité de transmission ne reçoit plus de signal d'état.

Le capteur 20 est configuré pour envoyer un signal de chargement comprenant au moins une information sur l'état de la source d'énergie autonome 54 lorsque la structure déployable 30 est en position repliée. Une telle disposition permet à l'unité de transmission 40 de ne plus envoyer de signal incident lorsque le signal de chargement indique que la source d'énergie autonome est suffisamment chargée. Une telle disposition permet donc une économie d'énergie.

Le signal de chargement est envoyé soit lorsque la source d'énergie autonome 54 est complètement chargée, soit à intervalle régulier.

Tel qu'illustré à la figure 2, le capteur 20 est configuré pour recevoir et convertir le signal incident même lorsque l'unité logique de traitement est hors tension. En effet, l'émetteur/récepteur sans fil 50 est électriquement connecté à une première diode 60, ladite première diode 60 étant configurée pour être passante dans le sens de la réception du signal incident. L'émetteur/récepteur sans fil 50 est également électriquement connecté à une deuxième diode 62, ladite deuxième diode étant configurée pour être passante dans le sens de l'émission de signal. La première diode 60 est électriquement connectée au convertisseur 56 alors que la deuxième diode 60 est électriquement connectée à l'unité logique de traitement 52. En d'autres termes, l'émetteur/récepteur sans fil 50 est passivement connecté au convertisseur 56. Une telle disposition permet au signal incident d'être automatiquement dirigé vers le convertisseur 56, et cela même lorsque l'unité logique de traitement 52 est hors tension. Une telle disposition permet d'obtenir un courant électrique pour alimenter l'unité logique de traitement 52 et pour envoyer un signal même sans alimentation électrique interne au dispositif de commande.

Le capteur 20 comprend également des résistances variables 66 commandées par l'unité logique de traitement 52 permettant d'isoler électriquement l'émetteur/récepteur sans fil 50 du convertisseur 56. Une telle disposition permet de ne pas convertir les signaux reçus et ainsi de pouvoir les lire.

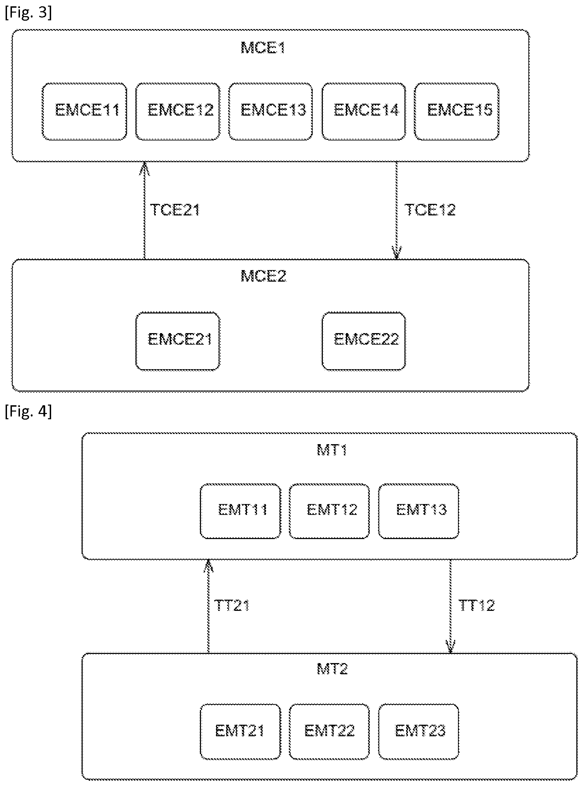

La figure 3 représente un mode de mise en oeuvre d'un procédé de commande du capteur 20 ou procédé de fonctionnement. Le capteur présente plusieurs modes de fonctionnement distincts.

Selon un premier mode de fonctionnement MCE1 correspondant à un mode de chargement, le capteur peut réaliser les étapes suivantes :
- réception EMCE11 d'un signal incident en provenance de l'unité de transmission 40 ;
- conversion EMCE12 du signal incident en courant électrique ; et
- chargement EMCE13 de la source d'énergie autonome 54 du capteur 20 à l'aide du courant électrique issue de la conversion du signal incident.

Selon le premier mode de fonctionnement MCE1, le capteur 20 peut également réaliser une étape d'émission d'une information de chargement EMCE14 indiquant le niveau de charge de la source d'énergie autonome. Cette étape peut être périodique ou réalisée lorsque le niveau de charge de la source d'énergie autonome 54 atteint une valeur prédéterminée, correspondant par exemple à la charge complète.

Selon le premier mode de fonctionnement MCE1, le capteur 20 peut également réaliser une étape de mise en sommeil EMCE15 si la charge de la source autonome est achevée.

Ainsi, dans le premier mode de fonctionnement MCE1, la source d'énergie autonome 54 du capteur 20 peut être chargée complètement suite à la réception de plusieurs trames de signal incident converties en énergie. Une information du niveau de charge est envoyée à l'unité de transmission 40 pour l'arrêt de l'envoi de trames. Le capteur 20 est mis en sommeil, ce qui correspond à un mode de veille en attendant de passer dans le deuxième mode de fonctionnement MCE2.

Selon un deuxième mode de fonctionnement MCE2 correspondant à un mode de détection et d'émission, le capteur 20 réalise les étapes suivantes :
- une étape d'émission d'un signal d'information MCE21 à l'unité de transmission 40, notamment en cas de détection d'un mouvement 58 critique ;
- une étape d'émission d'un signal d'état MCE22 comprenant une information sur la quantité d'énergie restante dans la source d'énergie autonome 54 du capteur 20 ;

Le premier mode de fonctionnement MCE1 correspond au fonctionnement nominal du capteur dans une position repliée de la structure repliée, c'est à dire lorsque la distance entre l'extrémité proximale 32 et l'extrémité distale 34 de ladite structure déployable 30 est inférieure au seuil Sd.

Le deuxième mode de fonctionnement MCE2 correspond au fonctionnement nominal du capteur dans une position déployée de la structure déployable, c'est à dire lorsque la distance entre l'extrémité proximale 32 et l'extrémité distale 34 de ladite structure déployable 30 est supérieure au seuil Sd.

La transition TCE12 du premier mode de fonctionnement MCE1 au deuxième mode de fonctionnement MCE2 peut être commandée lors du déploiement de la structure déployable. En particulier, la transition TCE12 peut être déclenché par un signal de l'unité de détection de mouvement 58. Alternativement, un signal spécifique de réveil correspondant par exemple à une trame radiofréquence ou une trame énergétique envoyée par l'unité de transmission 40 peut déclencher cette transition. Comme indiqué précédemment, la position du capteur 20 et le dépassement du seuil Sd est accessible à l'actionneur 38 associé à l'unité de transmission 40.

La transition TCE21 du deuxième mode de fonctionnement MCE2 au premier mode de fonctionnement MCE1 peut être commandé lors du repliement de la structure déployable. Comme indiqué précédemment, la position du capteur 20 et le dépassement du seuil Sd est accessible à l'actionneur 38 associé à l'unité de transmission 40. Ainsi, lorsque le seuil Sd est atteint, l'unité de transmission peut commencer à émettre un signal incident qui déclenche pour le capteur 20 le passage dans le premier mode de fonctionnement.

La figure 4 représente un mode de mise en oeuvre d'un procédé de commande de l'unité de transmission 40 ou procédé de fonctionnement. L'unité de transmission présente plusieurs modes de fonctionnement distincts.

Selon un premier mode de fonctionnement MT1 correspondant à un mode de chargement, l'unité de transmission 40 réalise :
- une étape de d'émission EMT11 d'un signal à destination du capteur 20, ce signal correspondant au signal incident énergétique reçu par le capteur dans l'étape EMCE11 ;
- une étape de réception d'une information de chargement EMT12 indiquant le niveau de charge de la source d'énergie autonome du capteur 20 ;
- une étape éventuelle de mise en sommeil EMT13 de l'émission si la charge de la source autonome est complétée .

Selon un deuxième mode de fonctionnement MT2 correspondant à un mode de détection et de réception, l'unité de transmission 40 réalise les étapes suivantes :
- une étape de réception d'un signal d'information EMT21 à l'unité de transmission 40, notamment en cas de détection d'un mouvement 58 critique ;
- une étape de réception d'un signal d'état EMT22 comprenant une information sur la quantité d'énergie restante dans la source d'énergie autonome 54 du capteur 20 ;
- une étape éventuelle de commande de repliement de la structure déployable EMT23 si l'une des étapes de réception indique un mouvement critique ou une faible charge du capteur 20.

Le premier mode de fonctionnement MT1 correspond au fonctionnement nominal du capteur dans une position repliée de la structure repliée, c'est à dire lorsque la distance entre l'extrémité proximale 32 et l'extrémité distale (34) de ladite structure déployable 30 est inférieure au seuil Sd.

Le deuxième mode de fonctionnement MT2 correspond au fonctionnement nominal du capteur dans une position déployée de la structure déployable, c'est à dire lorsque la distance entre l'extrémité proximale 32 et l'extrémité distale 34 de ladite structure déployable 30 est supérieure au seuil Sd.

La transition TT12 du premier mode de fonctionnement MT1 au deuxième mode de fonctionnement MT2 peut être commandée lors du déploiement de la structure déployable. La transition TT21 du deuxième mode de fonctionnement MT2 au premier mode de fonctionnement MT1 peut être commandé lors du repliement de la structure déployable. Comme indiqué précédemment, la position du capteur 20 et le dépassement du seuil Sd est accessible à l'actionneur 38 associé à l'unité de transmission 40. Ainsi, lorsque le seuil Sd est atteint, l'unité de transmission peut basculer d'un mode de fonctionnement à l'autre.

Par défaut, le capteur se place en mode de chargement. Cela permet à l'ensemble de fonctionner même si la source autonome d'énergie du capteur est complètement déchargée.

A titre d'exemple, le seuil de distance pour passer dans le mode de chargement peut être de quelques dizaines de cm. En particulier, le capteur et l'unité de transmission peuvent être distante de moins de 50 cm, notamment d'une distance de l'ordre de 20 à 30 cm. Le seuil de distance correspond notamment à la distance entre l'antenne du capteur et l'antenne de l'unité de transmission. L'unité de transmission peut par exemple dans le mode de fonctionnement de chargement émettre en continu une puissance de quelques dizaines de mW. A titre d'exemple, la charge peut être réalisée en quelques minutes voire quelques dizaines de minutes pour une journée d'autonomie avec une émission toutes les 15 minutes d'un signal d'état pour témoigner de la présence et quelques trames d'information, indiquant par exemple une vibration, tous les jours.

Selon une possibilité, une étape de configuration peut être réalisée pour optimiser la puissance d'émission du capteur en fonction de la distance au moteur et des perturbations pouvant exister localement. Cela permet d'adapter la consommation d'énergie pour communiquer entre le capteur et le moteur.

Bien entendu, l'invention n'est pas limitée aux modes de réalisation représentés et décrits ci-avant, mais en couvre au contraire toutes les variantes. En particulier, l'invention serait applicable à d'autre types de structures déployables comme des stores à lames orientables.

L'invention pourrait par exemple être applicable à un volet roulant motorisé, ou à un store vénitien d'extérieur, auquel serait associé un capteur de préférence placé sur une lame située sur la partie inférieure du volet. Ce peut être un capteur anti-intrusion apte à détecter un mouvement correspondant à une tentative de soulèvement de tablier de volet roulant ou des lames d'un store vénitien d'extérieur, ou à un capteur d'ensoleillement qui pourrait informer toute une installation domotique sur le niveau d'ensoleillement extérieur. Bien sûr d'autres types de capteurs pourraient être imaginés utilisant des unités de détection de types distincts. Dans cet exemple l'unité de transmission serait associée à un moteur d'entraînement du volet roulant placé au centre du tube d'enroulement du volet, ou à un moteur d'entrainement des lames d'un store vénitien d'extérieur placé sur la partie supérieure du store. De la même manière qu'avec le mode de réalisation du store, le capteur pourra être rechargé lorsque le volet est levé est que la distance entre l'unité de transmission et le capteur est inférieure à un seuil Sd.

L'invention pourrait aussi s'appliquer à une protection solaire intérieure de type store rouleau ou store vénitien par exemple. Dans cet exemple un capteur peut être placé sur la partie inférieure du store et en particulier sur la barre de charge. Le capteur peut être un capteur comprenant une unité de détection de mouvement apte à détecter un choc correspondant à un ordre de montée ou de descente du store, ou une unité de détection comprenant des touches tactiles constituant un clavier de commande permettant à l'utilisateur de commander le mouvement du store. De la même manière que dans les exemples précédents l'unité de transmission est associée à un actionneur permettant de mettre en mouvement le store. L'unité de transmission pourrait dans ce cas également transmettre l'énergie au capteur présent dans la partie inférieure du store lorsque ce dernier est en position repliée.

## Revendications

1. Capteur (20) destiné à être positionné sur une partie mobile (34) d'une structure déployable (30), et à émettre un signal d'information à destination d'une unité de transmission (40) solidaire d'une partie fixe (32) de la structure déployable (30), tel que le capteur (20) comprend :
- un émetteur/récepteur sans fil (50) configuré pour recevoir un signal incident en provenance de l'unité de transmission (40) selon un premier mode de fonctionnement (MCE1) ;
- une source d'énergie autonome (54) ;
- un convertisseur (56) configuré pour convertir le signal incident en courant électrique et pour alimenter la source d'énergie autonome (54) à l'aide dudit courant électrique ;
- une unité logique de traitement (52) adaptée pour décider de l'émission du signal d'information à l'unité de transmission (40) par l'émetteur/récepteur sans fil (50) selon un deuxième mode de fonctionnement (MCE2), la source d'énergie autonome (54) étant configurée pour alimenter l'unité logique de traitement (52) ;
le premier mode de fonctionnement (MCE1) correspondant au fonctionnement du capteur dans une position repliée de la structure déployable, le deuxième mode de fonctionnement (MCE2) correspondant au fonctionnement du capteur dans une position déployée de la structure déployable.

2. Capteur (20) selon la revendication 1, tel que le capteur (20) comprend une unité de détection de mouvement configurée pour détecter les mouvements de la structure déployable (30), l'unité logique de traitement (52) étant configurée pour décider de l'émission du signal d'information sur la base des mouvements de la structure déployable (30) détectés par l'unité de détection de mouvement.

3. Capteur (20) selon l'une quelconque des revendication 1 à 2, tel qu'un seuil entre la position déployée et la position repliée de la structure déployable est déterminé en fonction de la quantité de courant électrique issue de la conversion du signal incident.

4. Capteur (20) selon l'une quelconque des revendication 1 à 3, tel que le capteur (20) est configuré pour envoyer un signal d'état comprenant au moins une information sur l'état du capteur (20) à intervalle régulier lorsque la structure déployable (30) est en position déployée.

5. Capteur (20) selon l'une quelconque des revendication 1 à 4, tel que le capteur (20) est configuré pour envoyer un signal de chargement comprenant au moins une information sur l'état de la source d'énergie autonome (54) lorsque la structure déployable (30) est en position repliée.

6. Capteur (20) selon l'une quelconque des revendication 1 à 5, dans lequel le premier mode de fonctionnement (MCE1) est le mode de fonctionnement par défaut du capteur (20).

7. Ensemble comprenant un capteur (20) destiné à être positionné sur une partie mobile (34) d'une structure déployable (30) selon l'une des revendications 1 à 6 et une unité de transmission (40) solidaire d'une partie fixe (32) de la structure déployable (30), dans lequel l'unité de transmission (40) est configurée pour envoyer un signal de commande de changement de position de la structure déployable (30) à un actionneur, l'actionneur étant configuré pour déplacer ladite structure déployable (30) vers une position repliée depuis une position déployée.

8. Ensemble selon la revendication 7, tel que l'unité de transmission (40) est configurée pour envoyer le signal de commande à la réception du signal d'information en provenance du capteur (20).

9. Ensemble selon l'une quelconque des revendications 7 à 8, tel que l'unité de transmission (40) est configurée pour envoyer le signal de commande lorsque ladite unité de transmission (40) ne reçoit plus de signal d'état en provenance du capteur (20).

10. Procédé de commande d'un capteur (20) destiné à être positionné sur une partie mobile (34) d'une structure déployable (30), le procédé de commande étant exécuté par le capteur (20) et comprenant :
- un premier mode de fonctionnement (MCE1) correspondant à un mode de chargement, le capteur (20) réalisant les étapes suivantes :
- réception d'un signal incident (EMCE11), le signal incident provenant d'une unité de transmission (40) solidaire d'une partie fixe (32) de la structure déployable (30) ;
- conversion du signal incident (EMCE12) en courant électrique ; et
- chargement (EMCE13) d'une source d'énergie autonome (54) du capteur (20) à l'aide du courant électrique issu de la conversion du signal incident ; et
- un deuxième mode de fonctionnement (MCE2) correspondant à un mode de détection et d'émission, le capteur (20) réalisant les étapes suivantes :
- émission d'un signal d'information (MCE21) à destination de l'unité de transmission (40) ;
le premier mode de fonctionnement (MCE1) correspondant au fonctionnement du capteur dans une position repliée de la structure déployable, le deuxième mode de fonctionnement (MCE2) correspondant au fonctionnement du capteur dans une position déployée de la structure déployable.

11. Procédé selon la revendication 10, dans lequel, dans le deuxième mode de fonctionnement, le capteur (20) réalise l'étape suivante :
- émission d'un signal d'état (MCE22) à destination de l'unité de transmission (40) comprenant une information sur une quantité d'énergie restante dans la source d'énergie autonome (54) du capteur (20).

12. Procédé selon l'une quelconque des revendications 10 à 11, dans lequel, dans le premier mode de fonctionnement, le capteur (20) réalise l'étape suivante :
- émission d'une information de chargement (EMCE14) à destination de l'unité de transmission (40) indiquant le niveau de charge de la source d'énergie autonome (54).

13. Procédé selon l'une des revendications 10 à 12, dans lequel, dans le premier mode de fonctionnement, le capteur (20) réalise l'étape suivante :
- mise en sommeil (EMCE15) si la charge de la source d'énergie autonome (54) est achevée.

14. Procédé selon l'une des revendications 10 à 13, dans lequel, dans le second mode de fonctionnement (MCE2), le capteur (20) réalise l'émission d'un signal d'information (MCE21) à destination de l'unité de transmission (40) en cas de détection d'un mouvement (58) de la structure déployable.

## Patentansprüche

1. Sensor (20), der ausersehen ist, um auf einem beweglichen Teil (34) einer ausfahrbaren Struktur (30) positioniert zu werden, und zum Emittieren eines Informationssignals an eine Übertragungseinheit (40), die mit einem festen Teil (32) der ausfahrbaren Struktur (30) fest verbunden ist, wobei der Sensor (20) umfasst:
- einen drahtlosen Emitter/Empfänger (50), der konfiguriert ist, um ein Inzidenzsignal zu empfangen, das von der Übertragungseinheit (40) stammt, gemäß einem ersten Betriebsmodus (MCE1);
- eine autonome Energiequelle (54);
- einen Wandler (56), der konfiguriert ist, um das Inzidenzsignal in elektrischen Strom umzuwandeln und die autonome Energiequelle (54) unter Verwendung des elektrischen Stroms zu versorgen;
- eine Verarbeitungslogikeinheit (52), die geeignet ist, um über die Emission des Informationssignals an die Übertragungseinheit (40) durch den drahtlosen Emitter/Empfänger (50) in einem zweiten Betriebsmodus (MCE2) zu entscheiden, wobei die autonome Energiequelle (54) konfiguriert ist, um die Verarbeitungslogikeinheit (52) zu versorgen;
wobei der erste Betriebsmodus (MCE1) dem Betrieb des Sensors in einer eingefahrenen Position der ausfahrbaren Struktur entspricht und der zweite Betriebsmodus (MCE2) dem Betrieb des Sensors in einer ausgefahrenen Position der ausfahrbaren Struktur entspricht.

2. Sensor (20) nach Anspruch 1, wobei der Sensor (20) eine Bewegungserfassungseinheit umfasst, die konfiguriert ist, um die Bewegungen der ausfahrbaren Struktur (30) zu erfassen, wobei die Verarbeitungslogikeinheit (52) konfiguriert ist, um über die Emission des Informationssignals auf der Grundlage der Bewegungen der ausfahrbaren Struktur (30), die von der Bewegungserfassungseinheit erfasst wurden, zu entscheiden.

3. Sensor (20) nach einem der Ansprüche 1 bis 2, wobei ein Schwellenwert zwischen der ausgefahrenen Position und der eingefahrenen Position der ausfahrbaren Struktur in Abhängigkeit von der Menge an elektrischem Strom bestimmt wird, die aus der Umwandlung des Inzidenzsignals resultiert.

4. Sensor (20) nach einem der Ansprüche 1 bis 3, wobei der Sensor (20) konfiguriert ist, um ein Zustandssignal zu senden, das mindestens eine Information über den Zustand des Sensors (20) in regelmäßigen Intervallen umfasst, wenn sich die ausfahrbare Struktur (30) in der ausgefahrenen Position befindet.

5. Sensor (20) nach einem der Ansprüche 1 bis 4, wobei der Sensor (20) konfiguriert ist, um ein Ladesignal zu senden, das mindestens eine Information über den Zustand der autonomen Energiequelle (54) umfasst, wenn sich die ausfahrbare Struktur (30) in der eingefahrenen Position befindet.

6. Sensor (20) nach einem der Ansprüche 1 bis 5, wobei der erste Betriebsmodus (MCE1) der Standardbetriebsmodus des Sensors (20) ist.

7. Anordnung, einen Sensor (20) umfassend, der ausersehen ist, um auf einem beweglichen Teil (34) einer ausfahrbaren Struktur (30) positioniert zu werden, nach einem der Ansprüche 1 bis 6, und eine Übertragungseinheit (40), die mit einem festen Teil (32) der ausfahrbaren Struktur (30) fest verbunden ist, wobei die Übertragungseinheit (40) konfiguriert ist, um ein Steuersignal zur Änderung der Position der ausfahrbaren Struktur (30) an einen Aktuator zu senden, wobei der Aktuator konfiguriert ist, um die ausfahrbare Struktur (30) von einer ausgefahrenen Position in eine eingefahrene Position zu bewegen.

8. Anordnung nach Anspruch 7, wobei die Übertragungseinheit (40) konfiguriert ist, um das Steuersignal an den Empfang des Informationssignals zu senden, das vom Sensor (20) stammt.

9. Anordnung nach einem der Ansprüche 7 bis 8, wobei die Übertragungseinheit (40) konfiguriert ist, um das Steuersignal zu senden, wenn die Übertragungseinheit (40) kein Zustandssignal mehr empfängt, das vom Sensor (20) stammt.

10. Verfahren zur Steuerung eines Sensors (20), der ausersehen ist, um auf einem beweglichen Teil (34) einer ausfahrbaren Struktur (30) positioniert zu werden, wobei das Steuerverfahren vom Sensor (20) ausgeführt wird, und umfasst:
- einen ersten Betriebsmodus (MCE1), der einem Lademodus entspricht, wobei der Sensor (20) die folgenden Schritte ausführt:
- Empfang eines Inzidenzsignals (EMCE11), wobei das Inzidenzsignal von einer Übertragungseinheit (40) stammt, die mit einem festen Teil (32) der ausfahrbaren Struktur (30) fest verbunden ist;
- Umwandlung des Inzidenzsignals (EMCE12) in elektrischen Strom; und
- Ladung (EMCE13) einer autonomen Energiequelle (54) des Sensors (20) unter Verwendung des elektrischen Stroms, der aus der Umwandlung des Inzidenzsignals resultiert; und
- einen zweiten Betriebsmodus (MCE2), der einem Erfassungs- und Emissionsmodus entspricht, wobei der Sensor (20) die folgenden Schritte ausführt:
- Emission eines Informationssignals (MCE21) an die Übertragungseinheit (40);
wobei der erste Betriebsmodus (MCE1) dem Betrieb des Sensors in einer eingefahrenen Position der ausfahrbaren Struktur entspricht, und der zweite Betriebsmodus (MCE2) dem Betrieb des Sensors in einer ausgefahrenen Position der ausfahrbaren Struktur entspricht.

11. Verfahren nach Anspruch 10, wobei im zweiten Betriebsmodus der Sensor (20) den folgenden Schritt ausführt:
- Emission eines Zustandssignals (MCE22) an die Übertragungseinheit (40), eine Information über eine Energiemenge umfassend, die in der autonomen Energiequelle (54) des Sensors (20) verbleibt.

12. Verfahren nach einem der Ansprüche 10 bis 11, wobei, im ersten Betriebsmodus, der Sensor (20) den folgenden Schritt ausführt:
- Emission einer Ladeinformationen (EMCE14) an die Übertragungseinheit (40), die den Ladestand der autonomen Energiequelle (54) anzeigt.

13. Verfahren nach einem der Ansprüche 10 bis 12, wobei, im ersten Betriebsmodus, der Sensor (20) den folgenden Schritt ausführt:
- auf Ruhezustand schalten (EMCE15), wenn die Ladung der autonomen Energiequelle (54) abgeschlossen ist.

14. Verfahren nach einem der Ansprüche 10 bis 13, wobei, im zweiten Betriebsmodus (MCE2), der Sensor (20) die Emission eines Informationssignals (MCE21) an die Übertragungseinheit (40) ausführt, bei der Erfassung einer Bewegung (58) der ausfahrbaren Struktur.

## Claims

1. A sensor (20) intended to be positioned on a mobile part (34) of a deployable structure (30), and to emit an information signal to a transmission unit (40) secured to a fixed part (32) of the deployable structure (30), such that the sensor (20) comprises:
- a wireless transceiver (50) configured to receive an incident signal from the transmission unit (40) according to a first operating mode (MCE1);
- an autonomous energy source (54);
- a converter (56) configured to convert the incident signal into electric current and to power the autonomous energy source (54) using said electric current;
- a logic processing unit (52) adapted to decide whether to emit the information signal to the transmission unit (40) by the wireless transceiver (50) according to a second operating mode (MCE2), the autonomous energy source (54) being configured to power the logic processing unit (52);
the first operating mode (MCE1) corresponding to the operation of the sensor in a folded position of the deployable structure, the second operating mode (MCE2) corresponding to the operation of the sensor in a deployed position of the deployable structure.

2. The sensor (20) according to claim 1, such that the sensor (20) comprises a movement detection unit configured to detect the movements of the deployable structure (30), the logic processing unit (52) being configured to deciding whether to emit the information signal based on the movements of the deployable structure (30) detected by the movement detection unit.

3. The sensor (20) according to any one of claims 1 and 2, such that a threshold between the deployed position and the folded position of the deployable structure is determined as a function of the quantity of electric current resulting from the conversion of the incident signal.

4. The sensor (20) according to any one of claims 1 to 3, such that the sensor (20) is configured to send a status signal comprising at least one piece of information on the status of the sensor (20) at regular intervals when the deployable structure (30) is in the deployed position.

5. The sensor (20) according to any one of claims 1 to 4, such that the sensor (20) is configured to send a loading signal comprising at least one piece of information on the status of the autonomous energy source (54) when the deployable structure (30) is in the folded position.

6. The sensor (20) according to any one of claims 1 to 5, wherein the first operating mode (MCE1) is the default operating mode of the sensor (20).

7. An assembly comprising a sensor (20) intended to be positioned on a movable part (34) of a deployable structure (30) according to any of claims 1 to 6 and a transmission unit (40) secured to a fixed part (32) of the deployable structure (30), wherein the transmission unit (40) is configured to send a control signal of position change of the deployable structure (30) to an actuator, the actuator being configured to move said deployable structure (30) to a folded position from a deployed position.

8. The assembly according to claim 7, such that the transmission unit (40) is configured to send the control signal upon reception of the information signal from the sensor (20).

9. The assembly according to any one of claims 7 and 8, such that the transmission unit (40) is configured to send the control signal when said transmission unit (40) no longer receives a status signal from the sensor (20).

10. A method for controlling a sensor (20) intended to be positioned on a mobile part (34) of a deployable structure (30), the control method being executed by the sensor (20) and comprising:
- a first operating mode (MCE1) corresponding to a loading mode, the sensor (20) carrying out the following steps:
- receiving an incident signal (EMCE11), the incident signal coming from a transmission unit (40) secured to a fixed part (32) of the deployable structure (30);
- converting the incident signal (EMCE12) into electric current; and
- charging (EMCE13) an autonomous energy source (54) of the sensor (20) using the electric current resulting from the conversion of the incident signal; and
- a second operating mode (MCE2) corresponding to a detection and emission mode, the sensor (20) carrying out the following steps:
- emitting an information signal (MCE21) to the transmission unit (40);
the first operating mode (MCE1) corresponding to the operation of the sensor in a folded position of the deployable structure, the second operating mode (MCE2) corresponding to the operation of the sensor in a deployed position of the deployable structure.

11. The method according to claim 10, wherein, in the second operating mode, the sensor (20) carries out the following step:
- emitting a status signal (MCE22) to the transmission unit (40) comprising a piece of information on a quantity of energy remaining in the autonomous energy source (54) of the sensor (20).

12. The method according to any one of claims 10 and 11, wherein, in the first operating mode, the sensor (20) carries out the following step:
- emitting charging information (EMCE14) to the transmission unit (40) indicating the charging level of the autonomous energy source (54).

13. The method according to any of claims 10 to 12, wherein, in the first operating mode, the sensor (20) carries out the following step:
- putting-to-sleep (EMCE15) if the charging of the autonomous energy source (54) is completed.

14. The method according to any of claims 10 to 13, wherein, in the second operating mode (MCE2), the sensor (20) carries out the emission of an information signal (MCE21) to the transmission unit (40) in case of detection of a movement (58) of the deployable structure.
